(19)

Europäisches
Patentamt
European
Patent Office
Office européen
des brevets

(11) **EP 3 364 175 A1**

(12) **EUROPEAN PATENT APPLICATION**

(43) Date of publication:
**22.08.2018 Bulletin 2018/34**

(51) Int Cl.:
**G01N 23/20008** $^{(2018.01)}$

(21) Application number: **18154343.0**

(22) Date of filing: **31.01.2018**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD TN**

(30) Priority: **17.02.2017   JP 2017028055**

(71) Applicant: **Kobelco Research Institute, Inc.
Kobe-shi, Hyogo 651-0073 (JP)**

(72) Inventors:
• INOUE, Kenichi
  **Kobe-shi,, Hyogo 651-2271 (JP)**
• YAMASAKI, Hiroyasu
  **Kobe-shi,, Hyogo 657-0863 (JP)**
• INABA, Masayuki
  **Kobe-shi,, Hyogo 651-2271 (JP)**

(74) Representative: **TBK
Bavariaring 4-6
80336 München (DE)**

(54) **INSPECTION APPARATUS, INSPECTION SYSTEM AND INSPECTION METHOD**

(57)     An inspection apparatus 20 is for an inspection of a target region 13 including a part of a subsurface portion 12 of a sample 10 having an approximately circular cross section. The inspection apparatus 20 includes an X-ray source 40 that emits X-rays, a crystal plate 70 being a single crystal, and a detector 80. The crystal plate 70 is disposed to reflect and diffract X-rays (refractive X-rays X5) having been emitted by the X-ray source 40 and refracted in the target region 13. The crystal plate 70 is disposed to allow X-rays (rectilinear X-rays X3) having been emitted by the X-ray source 40 and entering the crystal plate 70 without having been incident on the sample 10 to transmit through the crystal plate 70. The detector 80 detects an intensity of the X-rays (reflected and diffracted X-rays X7) reflected and diffracted by the crystal plate 70.

Fig. 2

EP 3 364 175 A1

**Description**

BACKGROUND OF THE INVENTION

Field of Invention

The present invention relates to an inspection apparatus, an inspection system and an inspection method for an inspection of a sample.

Background Art

A conventional inspection apparatus is described in, for example, Japanese Unexamined Patent Application, Publication No. 2010-38627 (see Fig. 2). According to the technique disclosed in the document, in an attempt to observe a sample, a part of X-rays having transmitted through a sample (subject) is reflected and diffracted by a crystal so as to be subjected to detection. According to the technique disclosed in Japanese Unexamined Patent Application, Publication No. 2006-26425 (see Figs. 1 and 5), X rays having transmitted through a sample (subject) are superimposed on X-rays having passed through a region outside the surface of the sample and close to the surface of the sample (the outer vicinity of the surface), for the purpose of contrast enhancement at the edge of the sample.

Prior Art Documents

Patent Documents

Patent Document 1: Japanese Unexamined Patent Application, Publication No. 2010-38627
Patent Document 2: Japanese Unexamined Patent Application, Publication No. 2006-26425

SUMMARY OF THE INVENTION

Problems to be Solved by the Invention

An inspection may be performed on a subsurface portion of a sample in some cases. When the techniques disclosed in Japanese Unexamined Patent Applications, Publication Nos. 2010-38627 and 2006-26425 are employed in attempts to detect X-rays having transmitted through a predetermined region (target region) of the subsurface portion, X-rays having passed through the outer vicinity of the surface of the sample without having been incident on the sample are also inevitably detected. Thus, an inspection on the subsurface portion may not be performed with high accuracy.
Accordingly, an object of the present invention is to provide an inspection apparatus, an inspection system and an inspection method which enable an accurate inspection of a subsurface portion of a sample.

Means for Solving the Problems

A first aspect of the present invention provides an inspection apparatus for an inspection of a target region including a part of a subsurface portion of a sample having an approximately circular cross section. The inspection apparatus includes an X-ray source that emits X-rays, a crystal plate and a detector. The crystal plate is a single crystal and is disposed to reflect and diffract X-rays having been emitted by the X-ray source and refracted in the target region, and to allow X-rays having been emitted by the X-ray source and entering the crystal plate without having been incident on the sample to transmit through the crystal plate. The detector detects an intensity of the X-rays reflected and diffracted by the crystal plate.
A second aspect of the present invention provides a method for inspecting a target region including a part of a subsurface portion of a sample having an approximately circular cross section. The inspection method includes: allowing X-rays having been emitted by an X-ray source and refracted in the target region to be reflected and diffracted at a crystal plate, and allowing X-rays having been emitted by the X-ray source and entering the crystal plate without having been incident on the sample to transmit through the crystal plate; and detecting with a detector the intensity of the X-rays reflected and diffracted by the crystal plate.

Effects of the Invention

The first aspect enables an accurate inspection of the subsurface portion of the sample. The second aspect enables an accurate inspection of the subsurface portion of the sample.

BRIEF DESCRIPTION OF THE DRAWINGS

Fig. 1 illustrates an inspection system viewed in the direction of the central axis of a sample;

Fig. 2 illustrates an inspection apparatus 20 illustrated in Fig. 1;

Fig. 3 illustrates a part of the inspection apparatus 20 illustrated in Fig. 2;

Fig. 4 illustrates condensation of rays caused by an inclusion 11 in a sample 10 illustrated in Fig. 3;

Fig. 5 shows a graph illustrating a relationship between a refraction angle $\theta$ and a depth position y of X-rays in the sample 10 illustrated in Fig. 2;

Fig. 6 shows a graph illustrating a relationship between an angle of incidence of X-rays on a crystal plate 70 illustrated in Fig. 2 and a reflectance of the X-rays;

Fig. 7 shows a graph illustrating a relationship between a Darwin width Wd indicated in Fig. 6 and the energy of X-rays;

Fig. 8 shows the graphs in Figs. 5 and 6, one above the other;

Fig. 9 shows the graphs in Figs. 5 and 6, one above the other; and

Fig. 10 illustrates an inspection apparatus 220 of a second embodiment viewed in the direction of the central axis of a sample;

DESCRIPTION OF THE PREFERRED EMBODIMENTS

First Embodiment

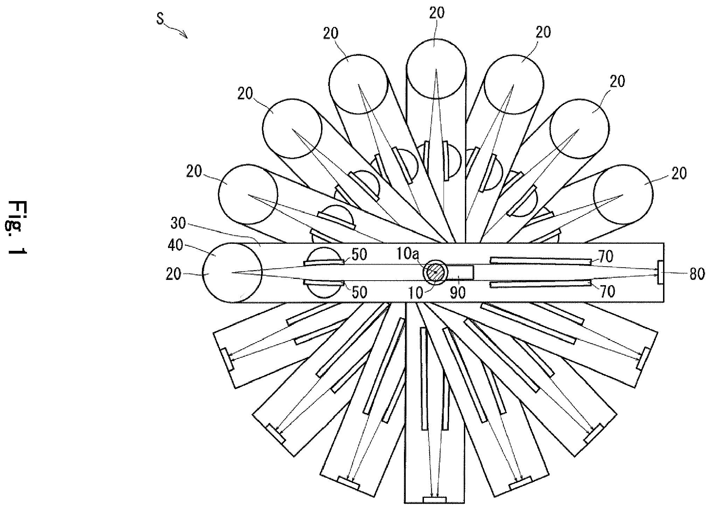

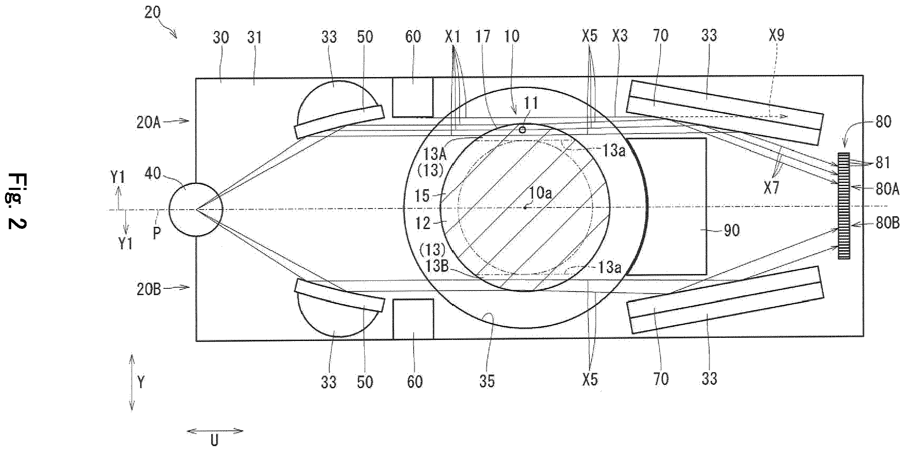

With reference to Figs. 1 to 9, the following will describe a freely selected inspection apparatus 20 included in an inspection system S of a first embodiment, and a sample 10 to be inspected by using the inspection apparatus 20 illustrated in Fig. 2.

The sample 10 has a central axis 10a. The sample 10 has an elongated shape extending along the central axis 10a, and may be, for example, liner (a wire) or cylindrical (a rod). The sample 10 has an approximately circular cross section. In other words, the cross section of the sample 10 (the global geometry of the cross section) is approximately circular (nearly circular or quasi-circular). The shape of the cross section of the sample 10 is preferably an approximately perfect circle (a nearly perfect circle or a quasi-perfect circle). In the cross section of the sample 10 viewed in the direction of the central axis 10a, the relationship between the minimum value and the maximum value of the distance between the central axis 10a and the surface of the sample 10 is as follows. For example, the ratio of the minimum value to the maximum value is greater than or equal to 0.5, 0.6, 0.7, 0.8, 0.9, 0.95, 0.96, 0.97, 0.98, 0.99, etc. When the cross section of the sample 10 has an "approximately circular" shape, the ratio of the minimum value to the maximum value is greater than or equal to 0.5. When the shape of the cross section of the sample 10 is an "approximately perfect circle", the ratio of the minimum value to the maximum value is greater than or equal to 0.99. The cross section of the sample 10 may have any shape as long as being approximately circular, and may be elliptic, nearly elliptic, polygonal, nearly polygonal, nearly polygonal with rounded corners, nearly rectangular, nearly rectangular with rounded corners, etc. For example, the shape of the cross section of the sample 10 may be rotationally symmetric about the central axis 10a, may be symmetric about a point on the central axis 10a, or may not be rotationally symmetric about the central axis 10a. The outer edge (e.g., outer periphery) of the cross section of the sample 10 includes a curve and/or a straight line. The material of the most part of the sample 10 (base material) is metal, and may be iron, metal containing iron, e.g., steel, etc. The sample 10 is, for example, a steel bar. The sample 10 is formed (manufactured) continuously along the central axis 10a. A void (flaw) and/or an inclusion 11 may be found in the sample 10. The detection of the inclusion 11 through the use of the inspection apparatus 20 will be described below. The sample 10 includes a subsurface portion 12. The sample 10 also includes a target region 13 and a nontarget region 15. The sample 10 has an inclined face 17.

Directions, etc.

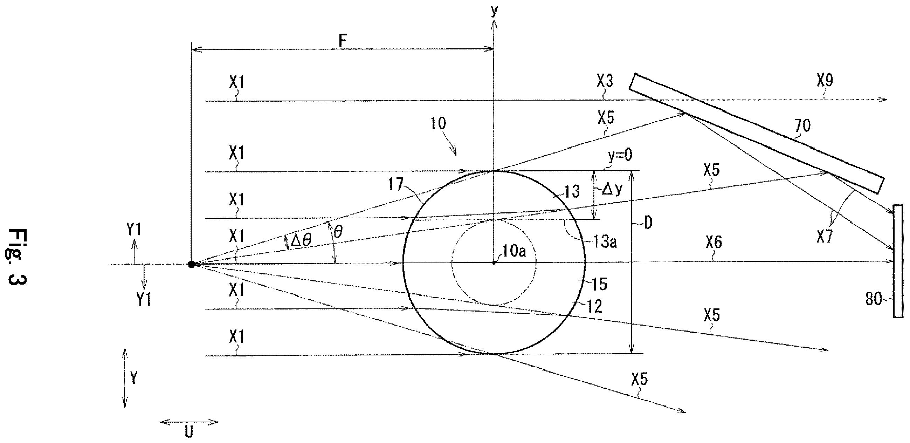

Directions associated with the inspection apparatus 20 are defined as follows. The direction of incident X-rays X1, which will be described below, is referred to as a direction U (incident direction). In the direction U, the upstream side of the incident X-rays X1 (the left side in Fig. 2) is referred to as an "upstream side in the direction U", and the downstream side of the incident X-rays X1 (the right side in Fig. 2) is referred to as a "downstream side in the direction U". The direction orthogonal to the direction U and orthogonal to the direction of the central axis 10a is referred to as a direction Y (incident orthogonal direction). The direction Y is, for example, an up-and-down direction, and may be a horizontal direction or a direction inclined with respect to the up-and-down direction. In the direction Y, the side farther from the central axis 10a and closer to the target region 13 (the incident X-rays X1) is referred to as an outer side Y1 (an outer side in the incident orthogonal direction). As illustrated in Fig. 3, a position in the direction Y is referred to as a depth position y. For example, the position in the outermost part of the sample 10 on the outer side Y1 in the direction Y is defined as a reference point of the depth position y (y = 0).

As illustrated in Fig. 2, the inclusion 11 is a substance (foreign matter) formed from a material different from the base material of the sample 10. The inclusion 11 is, for example, a nonmetal substance (nonmetal foreign matter). The inclusion 11 may be exemplified by a sulfide-based inclusion, or an oxide-based inclusion. The sulfide-based inclusion may be a sulfide containing, for example, at least one of Mn, Ca, Fe and Ti. The oxide-based inclusion may be an oxide containing, for example, at least one of Ca, A1 and Ti. In the case where the base material of the sample 10 is iron, the inclusion 11 is mostly an oxide-based inclusion. Examples of the oxide-based inclusion include a deoxidation product, a reoxidation product, an exogenous inclusion, and the like. The deoxidation product is generated when a deoxidant is charged into a molten metal. The reoxidation product is generated upon reaction with slag or air oxidation. The exogenous inclusion is generated due to slag contamination in a bull ladle and/or a tundish, mold powder mixed during the casting, etc. When being present in the subsurface portion 12, the inclusion 11 becomes a stress raiser upon the repetitive application of stress to the sample 10. Thus, the inclusion 11 may cause a fatigue fracture of (e.g., crack generation in) the sample 10. In particular, the oxide-based inclusion is likely to cause a fatigue fracture of the sample 10, thus constituting a matter of concern.

The subsurface portion 12 is a portion inside the sample 10 and close to the surface of the sample 10 (a portion inside the sample at a shallow depth). The subsurface portion 12 is a region extending from the surface of the sample 10 to a predetermined depth (certain depth). The subsurface portion 12 is a region which is to be subjected to an inspection performed by using the inspection system S (the region in which the inclusion 11 is to be detected), and is regarded as being a region of interest. The inner region of the sample 10 farther from the subsurface portion 12 and closer to the central axis 10a is the region which is not to be (does not need to be) subjected to the inspection performed by using the inspection system S, and is regarded as being a region of no interest.

The target region 13 is a portion which is to be subjected to an inspection performed by using the inspection apparatus 20, and is a region which falls within the charge of the inspection apparatus 20 during the inspection. The target region 13 includes a part of the subsurface portion 12. In the cross section of the sample 10, the target region 13 is surrounded by the surface (outer periphery) of the sample 10 and a region's edge 13a described below. In the cross section of the sample 10, the region's edge 13a is a straight line (imaginary straight line) extending in the direction U and passing through a position where the depth position y is equal to a predetermined depth $\Delta y$. The predetermined depth $\Delta y$ is a fraction of the diameter of the sample 10 (e.g., 1/N, wherein N is an integer of 2 to 9). For example, in a case where the sample 10 has a diameter of several mm, the predetermined depth $\Delta y$ is about 1 mm. The nontarget region 15 is a portion other than the target region 13 of the sample 10.

The inclined face 17 refracts the incident X-rays X1 incident on the target region 13 in the direction Y, e.g., toward the outer side Y1 in the direction Y. The inclined plane 17 is formed on the surface of the target region 13. The inclined face 17 is provided on the upstream side in the direction U (e.g., the upstream side in the direction U with respect to the central axis 10a) of the target region 13 and/or on the downstream side in the direction U (e.g., the downstream side in the direction U with respect to the central axis 10a) of the target region 13. The inclined face 17 is inclined with respect to the direction U and the direction Y. The inclined face 17 in the target region 13 on the upstream side in the direction U is provided in such a manner that a part of the inclined face 17 farther from the central axis 10a on the outer side Y1 in the direction Y is closer to the downstream side in the direction U. The inclined face 17 in the target region 13 on the downstream side in the direction U is provided in such a manner that a part of the inclined face 17 farther from the central axis 10a on the outer side Y1 in the direction Y is closer to the upstream side in the direction U. Also, the inclined face 17 is inclined in the direction U and the direction Y in such a manner that the width of the target region 13 in the direction U decreases toward the outer side Y1 in the direction Y. In the cross section of the sample 10 viewed in the direction of the central axis 10a, the inclined face 17 may be a curved face, a liner face, a nearly linear face, or a combination thereof. In the example illustrated in Fig. 2, the inclined face 17 in the cross section may be arc-shaped, circular arc-shaped, or nearly circular arc-shaped.

The inspection apparatus 20 is an apparatus for an inspection of the quality of the sample 10, and for a detection of the inclusion 11 in the target region 13. With the inspection apparatus 20, the presence or absence of the inclusion 11 is determined, the depth position y of the inclusion 11 (see Fig. 3) is preferably determined, and the size of the inclusion 11 is preferably determined. The inspection apparatus 20 measures an intensity of X-rays having transmitted through the target region 13 of the sample 10. As illustrated in Fig. 1, a plurality of inspection apparatuses 20 are provided. The plurality of inspection apparatuses 20 constitute the inspection system S. One of the plurality of inspection apparatuses 20 will be described below, and then the inspection system S will be described. As illustrated in Fig. 2, the inspection apparatus 20 includes a base 30, an X-ray source 40, a pair of collimating elements 50, a pair of collimators 60, a pair of crystal plates 70, a detector 80, and a shield 90. The inspection apparatus 20 includes a first optical system 20A and a second optical system 20B. One of the optical systems (the first optical system 20A) will be described below, and then the two optical systems will be described.

The base 30 is a portion (frame) having members (X-ray optical elements and devices) attached thereto. The X-ray source 40, the collimating elements 50, the collimators 60, the crystal plates 70, the detector 80 and the shield 90 are attached to the base 30. The base 30 includes an optical surface plate 31 (an optical base plate) having a plate-like shape, holding members 33 and a through-hole 35 for a sample. The optical surface plate 31 is preferably a low-thermal expansion member and is preferably formed from, for example, marble, so as to minimize thermal expansion caused by environmental temperature variations and distortion which may occur due to uneven temperatures. The holding member 33 is attached to the optical surface plate 31 and holds each member. The holding member 33 may be formed from an aluminum alloy, may be produced by casting, may be sculpted so as to reduce weight by removing unnecessary portions, and the face of the holding member 33 on which the X-ray optical elements are to be mounted may have been surface machined by milling. The through-hole 35 for a sample is a hole through which the sample 10 is to be inserted. The through-hole 35 for a sample is formed in the optical surface plate 31 and extends through the optical surface plate 31 in the direction of the central axis 10a. The through-hole 35 for a sample has a circular shape when viewed in the direction of the central axis 10a. The through-hole 35 for a sample is formed to be large enough to leave a gap between the through-hole 35 and the sample 10.

The X-ray source 40 is a device that emits X-rays. In the X-ray source 40, a luminescent point (irradiation unit) for emitting X-rays has a point-like shape. The shape of the luminescent point of the X-ray source 40 may be a circle, and may be a circle having a diameter of less than or equal to 5 $\mu$m. The size (e.g., diameter) of the luminescent point of the X-ray source 40 may be increased to several mm depending on the performance of the collimating element 50. The luminescent point of the X-ray source 40 may be nearly linear, and may extend in the direction of the central axis 10a. The distance between the sample 10 and the X-ray source 40 is, for example, greater than or equal to 1 m, and may be less than 1 m depending on the performance of the collimating element 50.

The collimating element 50 collimates and condenses X-rays emitted by the X-ray source 40. The collimating element 50 collimates the diverging X-rays, thereby condensing the X-rays. The collimating element 50 may be (as one of possible choices) a mirror (a collimating mirror or a condenser mirror) that allows total reflection of X-rays. The collimating element 50 is disposed in such a manner that the angle of incidence of X-rays having been emitted by the X-ray source 40 is smaller than the critical angle. The collimating element 50 is disposed between the X-ray source 40 and the sample 10. The expression "disposed between ..." herein means "disposed between ... on the path of X-rays (optical path)", the same applies in the following.

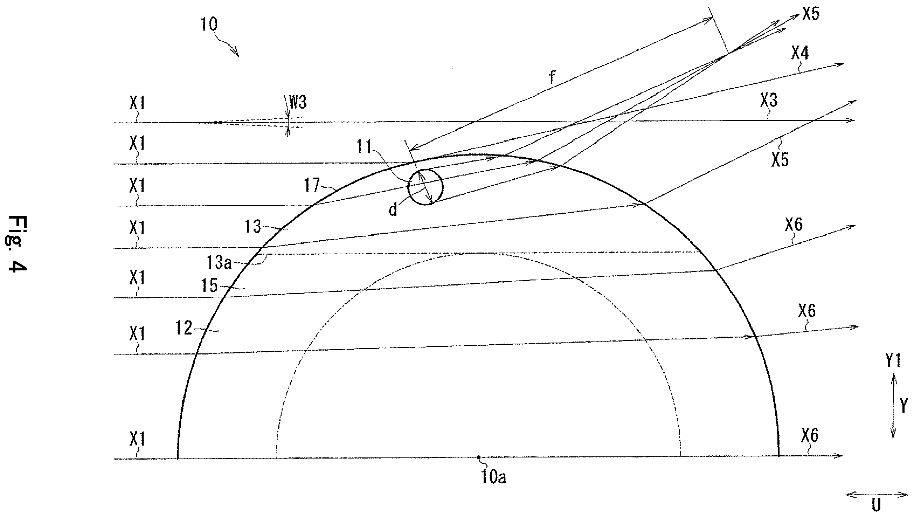

The collimator element 50 collimates and condenses X-rays such that the X-rays travel from the collimator element 50 toward the crystal plate 70. The collimator element 50 collimates and condenses X-rays such that the X-rays pass through the outer vicinity of the surface of the sample 10 and through the target region 13. The outer vicinity of the surface of the sample 10 is outside the surface of the sample 10 and close to the surface of the sample 10. The collimating element 50 collimates and condenses the X-rays such that the X-rays travel in the direction of a tangent line to the approximately circular cross section at the edge on the outer side Y1. The X-rays that travel toward the outer vicinity of the surface of the sample 10 and toward the target region 13 are herein referred to as the incident X-rays X1. The incident X-rays X1 travel from the collimating element 50 toward the crystal plate 70. The center line of the angular dispersion (emittance W3 illustrated in Fig. 4) (the center line of the angular range) of the incident X-rays X1 coincides with the direction U. As illustrated in Fig. 2, rectilinear X-rays X3 pass through the outer vicinity of the surface of the sample 10 without having been incident on the sample 10, and travel toward the crystal plate 70. Refractive X-rays X5 transmit through the target region 13, and are refracted in the target region 13 to travel toward to the crystal plate 70. As illustrated in Fig. 3, X-rays having transmitted though the nontarget region 15 of the sample 10 are herein referred to as nontarget-region transmissive X-rays X6. X rays having transmitted the vicinity of the center of the sample 10 (the region farther from the subsurface portion 12 and closer to the central axis 10a) are the nontarget-region transmissive X-rays X6. The nontarget-region transmissive X-rays X6 include, for example, X-rays having been emitted by the X-ray source 40 illustrated in Fig. 2 and having transmitted through the sample 10 without having been incident on the collimating element 50.

The collimating element 50 has a curved face, which is parallel to the central axis 10a (extends in the direction of the central axis 10a). The collimating element 50 has a paraboloid (including a nearly parabolic face) (a partial paraboloid), with the focal point at the position of the luminescent point of the X-ray source 40. The collimating element 50 is a curved mirror, and is a parabolic mirror. The effect of collimation and condensation of rays (reduction in the emittance W3 (see Fig. 4)) by the collimating element 50 is more likely to be achieved as the size of the luminescent point of the X-ray source 40 decreases.

The collimator 60 blocks X-rays which are not to be used in the inspection. The collimator 60 is disposed in the vicinity of the path of X-rays between the collimating element 50 and the sample 10. The collimator 60 may block the incident X-rays X1 (X-rays which are to become the rectilinear X-rays X3) traveling toward the outer vicinity of the surface of the sample 10. The collimator 60 is disposed to allow enough room so as not to block the incident X-rays X1 (X-rays which are to become the refractive X-rays X5) traveling toward the target region 13 (so as not to shadow the target region 13) even when the sample 10 is shifted in the direction Y. The material of the collimator 60 is preferably a substance which is as high as possible in atomic number, and may be a heavy metal such as lead. In a case where the X-rays are characteristic X-rays, the material of the collimator 60 is preferably a metal which is higher in atomic number than the target of the X-ray source 40.

The crystal plate 70 is disposed to reflect and diffract the refractive X-rays X5 and to allow the rectilinear X-rays X3 to transmit therethrough. The X-rays having been reflected and diffracted by the crystal plate 70 are herein referred to as reflected and diffracted X-rays X7. The X-rays having transmitted through the crystal plate 70 are herein referred to as crystal-plate transmissive X-rays X9. The crystal plate 70 is disposed in such a manner that the refractive X-rays X5 and the rectilinear X-rays X3 are incident on the crystal plate 70. The crystal plate 70 is disposed posterior to the sample 10 when viewed in the direction of the path of the incident X-rays X1. The crystal-plate transmissive X-rays X9 are absorbed by the crystal plate 70, and may be absorbed by, for example, the holding member 33 that holds the crystal plate 70. The crystal plate 70 has a plate-like shape. The crystal plate 70 is obtained by symmetrically cutting a crystal. In other words, the surface of the crystal plate 70 (the incident face of the X-rays) is parallel to the lattice plane of the crystal constituting the crystal plate 70. The crystal plate 70 includes a crystal lattice of a single crystal, and may be formed from a single crystal of Si. In relation to the orientation of a surface of the crystal plate 70, Millar indices thereof are, for example, (111).

The crystal plate 70 has a thickness of, for example, greater than or equal to 10 mm. The crystal plate 70 is held by the holding member 33. The holding member 33 that holds the crystal plate 70 may be formed from a low expansion alloy such as Invar, may be formed so as not to undergo inevitable dynamic distortion, and may be (permanently) fixed to the optical surface plate 31 such that the position of the crystal plate 70 with respect to that of the optical surface plate 31 will not change over time. The crystal plate 70 is formed to be angle-adjustable with respect to the optical surface plate 31. The holding member 33 that holds the crystal plate 70 includes, for example, a swivel stage. The crystal plate 70 is angle-adjustable with respect to the axis perpendicular to the surface of the optical surface plate 31 (with respect to the central axis 10a). The angle is adjustable within a range of, for example, $\pm 0.1$ $\mu$rad (5 x 10$^{-6}$ deg). The crystal plate 70 may be angle-adjustable with respect to the axis parallel to the surface of the optical surface plate 31 (with respect to the axis perpendicular to the central axis 10a), and is in principle fixed (semi-fixed). The angle which the crystal plate 70 forms with the axis parallel to the surface of the optical surface plate 31 is adjustable within a range of, for example, $\pm 0.1$ $\mu$rad (5 x 10$^{-6}$ deg).

The detector 80 detects the intensity of X-rays. The detector 80 detects the intensity of the reflected and diffracted X-rays X7. The detector 80 is disposed in such a manner that the sample 10 is interposed between the X-ray source 40 and the detector 80. The distance between the detector 80 and the sample 10 is, for example, greater than or equal to 1 m, or may be less than 1 m. The detector 80 may be a semiconductor detector which utilizes a semiconductor, may be a photon counting detector, and may include a pure Si element or a CdTe element. The detector 80 may be a light-converting type detector, and may include a scintillator (which includes an NaI crystal, etc.) mounted on a photomultiplier tube. The detector 80 includes a plurality of pixels 81. Alternatively, the detector 80 may include only one pixel 81. The following description will be given on the precondition that the plurality of pixels 81 are provided.

The plurality of pixels 81 (minute pixels) are arranged in one row (in a one-dimensional manner) or in a plurality of rows (in a two-dimensional manner). Each of the plurality of pixels 81 detects the intensity of X-rays. The plurality of pixels 81 are aligned in the direction Y in the least. Due to the detector 80 including the plurality of pixels 81, information on the depth position y and/or the size of the inclusion 11 can be obtained. In the case where the plurality of pixels 81 are arranged in a plurality of rows, the plurality of pixels 81 are aligned in the direction Y and the direction of the central axis 10a. The detector 80 is, for example, a line sensor including the pixels 81 arranged in only one row. Alternatively, the detector 80 may be an area sensor (an imaging detector) including the pixels 81 arranged in a plurality of rows. The detector 80 may be, for example, a time delay integration (TDI) detector including the pixels 81 arranged in a plurality of rows (tiers). It is to be noted that in Fig. 2, only some of the plurality of pixels 81 are denoted by the reference symbol.

The shield 90 is provided to improve the signal-to-noise (S/N) ratio of the refractive X-rays X5 detected by the detector 80. The shield 90 (stopper) blocks X-rays (disturbing X-rays) having transmitted through the sample 10 and traveling (straight) toward the detector 80 without entering the crystal plate 70. The shield 90 blocks the nontarget-region transmissive X-rays X6 (see Fig. 3). The shield 90 is interposed between the sample 10 and the detector 80. The shield 90 is posterior to the sample 10 when viewed from the X-ray source 40 toward the detector 80. The shield 90 is small enough so as not to block the X-rays (the refractive X-rays X5 and the reflected and diffracted X-rays X7) which are to be measured by the detector 80 (so as not to shadow the target region 13) even when the sample 10 is shifted in the direction Y. The shield 90 is disposed as close as possible to the through-hole 35 for a sample. The material of the shield 90 may be selected as with the material of the collimator 60, and may not be identical to the material of the collimator 60. In a case where the nontarget region 15 of the sample 10 acts as the shield 90, the shield 90 is not necessary. For example, in a case where a diameter D of the sample 10 is large (see Fig. 3), the nontarget-region transmissive X-rays X6 (see Fig. 3) are blocked by the nontarget region 15 of the sample 10, and fail to be (or be scarcely) detected by the detector 80. In this case, providing the shield 90 may not be necessary.

Mirror Symmetry

The first optical system 20A and the second optical system 20B are arranged in mirror symmetry with respect to a plane P (imaginary plane). The plane P is parallel to the central axis 10a and lies across the X-ray source 40, the sample 10 and the detector 80. A pair of collimating elements 50 are arranged in mirror symmetry with respect to the plane P. In other words, the first optical system 20A and the second optical system 20B are each provided with one collimating element 50 (each inspection apparatus 20 is provided with two collimating elements in total). Similarly, a pair of collimators 60 are arranged in mirror symmetry with respect to the plane P, and a pair of crystal plates 70 are arranged in mirror symmetry with respect to the plane P. Only one X-ray source 40 is provided for (shared by) the first optical system 20A and the second optical system 20B. Similarly, the detector 80 and the shield 90 are each shared by the first optical system 20A and the second optical system 20B. One part of the target region 13 on one side (one side in the direction Y, e.g., upper side in Fig. 2) with respect to the plane P is herein referred to as a first target region 13A. The other part of the target region 13 on the other side (the other side in the direction Y, e.g., lower side in Fig. 2) with respect to the plane P is herein referred to as a second target region 13B. The detector 80 includes a first detection unit 80A that detects X-rays refracted in the first target region 13A and a second detection unit 80B that detects X-rays refracted in the second target region 13B. The first detection unit 80A and the second detection unit 80B constitute different portions of the (one) detector 80 concerned.

In general, the inclusions 11 are rarely present in the target region 13A and the second target region 13B of a given cross section of the sample 10 (coincidentally at diametrically opposed positions). Thus, the detector 80 detects the refractive X-rays X5 having transmitted through the first target region 13A and the refractive X-rays X5 having transmitted through the second target region 13B. The first detection unit 80A detects the refractive X-rays X5 having transmitted through the first target region 13A. The second detection unit 80B detects the refractive X-rays X5 having transmitted through the second target region 13B. Then, the difference signal is calculated from the detected signals. Thus, the inclusion 11 on one side with respect to the plane P can be detected with high sensitivity. The first detection unit 80A and the second detection unit 80B are operated at the common bias voltage, whereby the difference in sensitivity between the detectors 80A and 80B is eliminated or reduced. The first detection unit 80A and the second detection unit 80B constitute different portions of the detector 80, and thus were manufactured under the same conditions. This enables elimination or reduction of the difference in detection characteristic between the detection units.

Behavior of X-rays

The behavior of X-rays in one of the optical systems (e.g., the first optical system 20A) will be described below. With the direction U as a reference (0 rad), the angle which an X-ray traveling toward the outer side Y1 in the direction Y forms with the reference is defined as a positive angle. The angle formed by the rectilinear X-rays X3 is 0 rad.

Refraction in Sample 10

For visible rays, a circular cross-sectional lens (refractive index n > 1) serves as a convex lens. The visible rays refracted by the convex lens are brought into focus at a position posterior to the lens. In the X-ray region, meanwhile, the refractive index n in a substance such as metal is slightly smaller than 1, and is represented by "1-$\delta$" (wherein, $\delta$ is a very low number). As illustrated in Fig. 3, the X-rays refracted in the sample 10 having a circular cross section are brought into focus at a point anterior to the sample 10. The sample 10 through which the X-rays have transmitted can behave like a concave lens through which the visible rays have transmitted. In the sample 10, the X-rays change in direction toward the outer side Y1 in the direction Y, i.e., the X-rays are refracted outward. The angle which the refractive X-rays X5 form with the incident X-rays X1 is referred to as a refraction angle $\theta$. It is to be noted that in Figs. 3 and 4, the refraction angle $\theta$ formed by the X-rays are shown larger than it actually is (e.g., 40 $\mu$rad) such that the understanding of the refraction of X-rays in the sample 10 can be facilitated. The shape of the cross section of the sample 10 does not need to be a perfect circle, and as long as the cross section is approximately circular, the incident X-rays X1 are refracted by the inclined face 17 in the direction Y (toward the outer side Y1).

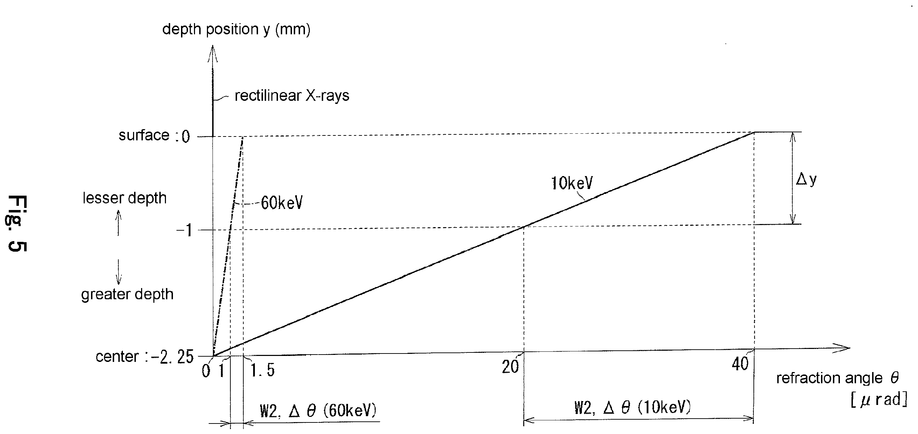

The graph in Fig. 5 illustrates a relationship between the refraction angle $\theta$ (axis of abscissas) and the depth position y which the X-rays pass through (axis of ordinates). The graph in Fig. 5 indicates, as a negative number, the depth position y at a depth greater than the depth of the reference position (on the side opposite to the outer side Y1 in the direction Y, on the central axis 10a side). The graphs will be described below while reference will be made to Fig. 3 as to the sample 10, the X-rays (e.g., the incident X-rays X1), the crystal plate 70 and the detector 80. The refraction

angle $\theta$ formed by the X-rays having transmitted through the sample 10 (having passed through the central axis 10a) at the greatest depth position y is 0 rad. The X-rays having transmitted through the sample 10 at the lesser depth position y (close to 0) has a greater refraction angle $\theta$. The refraction angle $\theta$ formed by the X-rays having passed through the depth position y being almost equal to 0 (in the immediate proximity to the surface) is greater than the refraction angles $\theta$ formed any other X-rays having transmitted through the sample 10. As illustrated in Fig. 4, the X-rays having been incident on the sample 10 at angles smaller than the critical angle are totally reflected by the surface of the sample 10 (see totally reflected X-rays X4). In actuality, the X-rays having been incident on the sample 10 at angles smaller than the critical angle fail to undergo the total reflection unless the surface of the sample 10 is so smooth that the surface roughness thereof is of the order of nanometers. Instead, the X-rays are dispersed, resulting in small-angle scattering. As illustrated in Fig. 5, the range of the angular width of the refraction angle $\theta$ formed by the X-rays having transmitted through the target region 13 is herein referred to as an angular range W2. The size of the angular range W2 is herein referred to as an angular width $\Delta\theta$. The refraction angle $\theta$ may vary depending on the energy of X-rays. As an example, Fig. 5 illustrates a relationship between the refraction angle $\theta$ and the depth position y for the case in which the X-rays have an energy of 10 keV and for the case in which the X-rays have an energy of 60 keV. Given that X-rays transmit through the same depth position y in the sample 10, the refraction angle $\theta$ decreases as the energy of the X-rays increases. Thus, the angular width $\Delta\theta$ decreases as the energy of the X-rays increases.

Diffraction by and Transmission through Crystal Plate 70

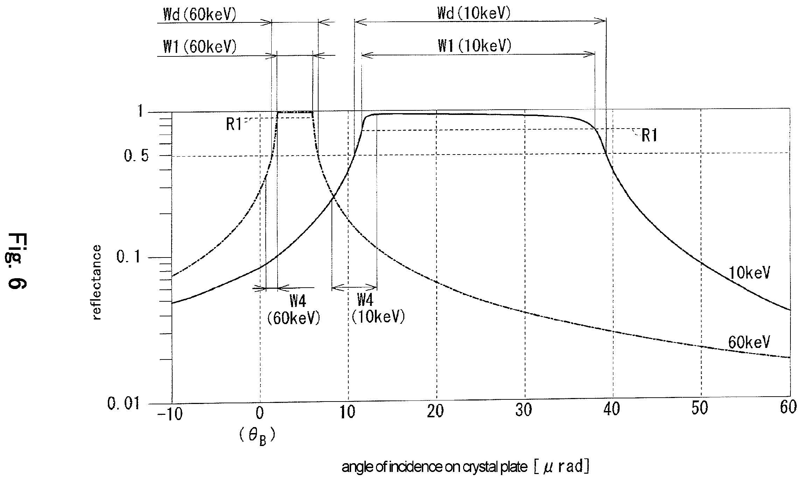

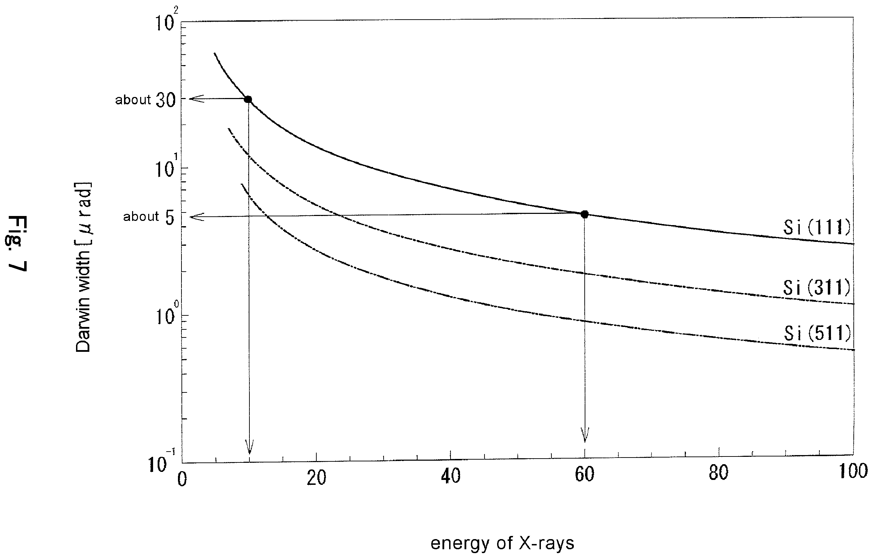

The X-rays may be reflected and diffracted by the crystal plate 70 or may transmit through the crystal plate 70 depending on the angle of incidence of the X-rays on the surface of the crystal plate 70 illustrated in Fig. 3. The reflectance of the X-rays at the crystal plate 70 varies with the angle of incidence of the X-rays on the surface of the crystal plate 70.
The graph in Fig. 6 illustrates a relationship between the angle of incidence of the X-rays on the crystal plate 70 (axis of abscissas) and the reflectance of the X-rays at the crystal plate 70 (axis of ordinates). In this graph, the angle of incidence (axis of abscissas) is expressed as an angle with respect to $\theta_B$, which will be described below (is expressed as an angle obtained where $\theta_B = 0$ (rad)). The curve of this graph is based on a dynamic diffraction theory, and is referred to as a rocking curve. The rocking curve will be described below in detail. It has been known that X-rays are reflected and diffracted by a crystal (herein, the crystal plate 70) when the Bragg's diffraction condition, i.e., $(2d)\sin\theta_B = \lambda$ is satisfied. In the equation, d represents the interplanar spacing of a crystal, $\theta_B$ represents the angle of incidence which satisfies the Bragg's diffraction condition, and $\lambda$ represents the wavelength of X-rays. In actuality, the range of the angle of incidence at which the reflection and diffraction of X-rays occur extends beyond $\theta_B$ in a manner to shift to one side (the side on which the angle of incidence is greater), due to multiple diffraction and refraction inside the crystal. The rocking curve may vary depending on the energy of X-rays. As an example, Fig. 6 illustrates a rocking curve for the case in which the X-rays have an energy of 10 keV and a rocking curve for the case in which the X-rays have an energy of 60 keV. The full width at half maximum (a Darwin width Wd) of the rocking curve decreases as the energy of the X-ray increases. Fig. 7 illustrates a relationship between the energy of the X-rays and the Darwin width for each of the cases in which the surface of the crystal plate 70 being a single crystal of Si is represented by (111), (311) or (511). As illustrated in Fig. 6, the axis of abscissas of the graph (the angle of incidence) varies with increasing energy of the X-rays in such a manner that the rocking curve contracts toward the $\theta_B$ side, with almost no change in the shape of the curve.

Relationship between Refraction Angle $\theta$ and Angle of Incidence of X-rays on Crystal Plate 70

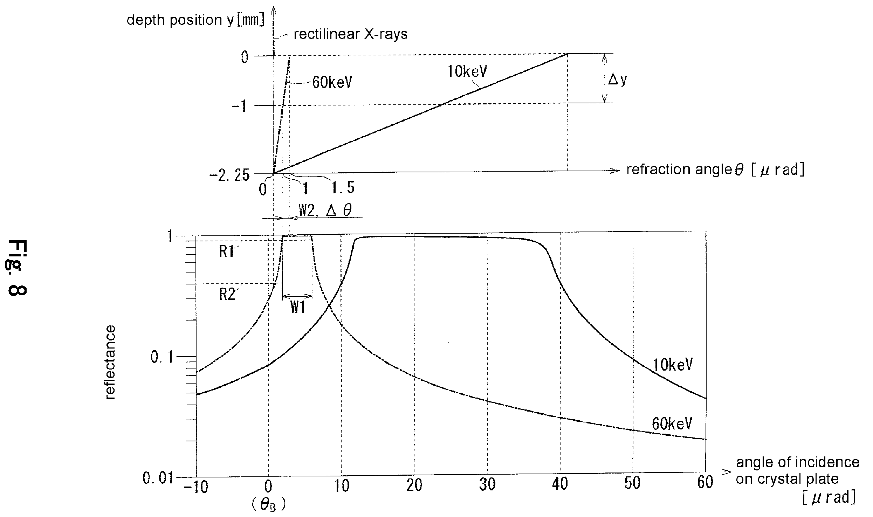

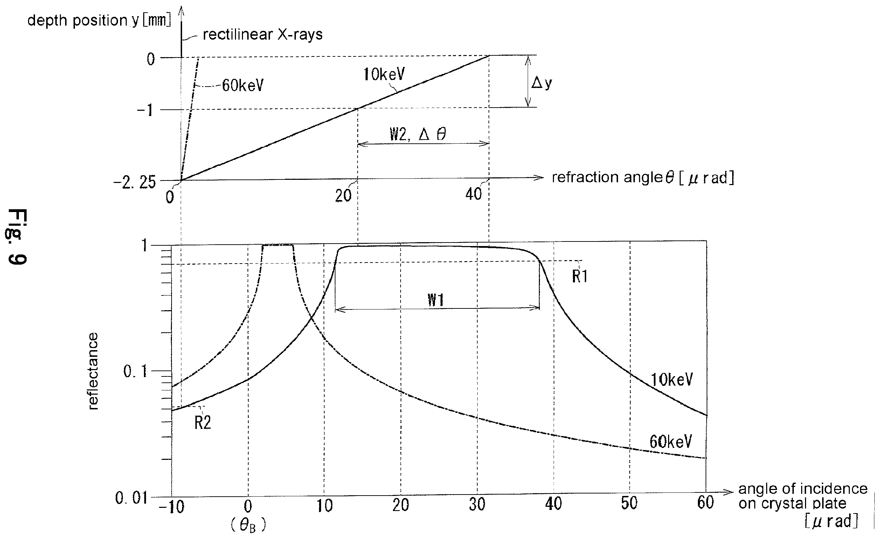

Figs. 8 and 9 each include the graph illustrating the relationship between the refraction angle $\theta$ and the depth position y with respect to the surface of the sample 10 (see Fig. 5) and the graph illustrating the relationship between the reflectance and the angle of incidence of X-rays on the crystal plate 70 (see Fig. 6), one graph on above the other graph. Fig. 8 shows a graph for the case in which the crystal plate 70 is disposed in such a manner that the angle of incidence of the rectilinear X-rays X3 ($\theta = 0$ rad) on the crystal plate 70 is equal to $\theta_B + 1$ ($\mu$rad). Fig. 9 shows a graph for the case in which the crystal plate 70 is disposed in such a manner that the angle of incidence of the rectilinear X-rays X3 ($\theta = 0$ rad) on the crystal plate 70 is equal to $\theta_B - 8$ ($\mu$rad).
When the reflectance is greater than or equal to a first reflectance R1, it is assumed that X-rays are "reflected and diffracted" by the crystal plate 70 (the conditions for reflection and diffraction are satisfied). When the reflectance is smaller than a second reflectance R2, it is assumed that X-rays "transmit" through the crystal plate 70 (the conditions for reflection and diffraction are not satisfied). The second reflectance R2 is smaller than the first reflectance R1. The range of the angle of incidence corresponding to the reflectance greater than or equal to the reflectance R1 is referred to as an allowable angular range W1. In Fig. 8, the first reflectance R1 is 0.9 and the second reflectance R2 is 0.4 under conditions where the X-rays have an energy of 60 keV. In Fig. 9, the first reflectance R1 is 0.7 and the second reflectance R2 is 0.05 under conditions where the X-rays have an energy of 10 keV.
The crystal plate 70 is disposed such that the following Conditions "a" and "b" are satisfied. Condition "a" involves the reflectance of the refractive X-rays X5 (X-rays with the angular range W2) at the crystal plate 70 being greater than or equal to the first reflectance R1. In other words, the angle of incidence of the X-rays on the crystal plate 70 with the angular range W2 falls within the allowable angular range W1. Thus, the refractive X-rays X5 are reflected and diffracted by the crystal plate 70 (the conditions for reflection and diffraction are satisfied). Condition "b" involves the reflectance of the rectilinear X-rays X3 ($\theta$ = 0 rad) at the crystal plate 70 being smaller than or equal to the second reflectance R2. Thus, the rectilinear X-rays X3 transmit through the crystal plate 70. When Conditions "a" and "b" are satisfied, the crystal plate 70 enables "extraction" of the refractive X-rays X5 from a mixture of the rectilinear X-rays X3 and the refractive X-rays X5. The crystal plate 70 may guide, to the detector 80, the refractive X-rays X5 that have been extracted. The extractive action is enabled as long as Conditions "a" and "b" are satisfied, regardless of the position of the sample 10 with respect to the crystal plate 70. The extractive action is unsusceptible to (tolerant of) the shift of the sample 10 in the direction Y. Thus, the inspection apparatus 20 may be readily used in a situation where the sample 10 is likely to be shifted in the direction Y (e.g., under an adverse environment at the site of manufacturing).

The values of the first reflectance R1 and the second reflectance R2 may be changed as long as the extractive action is ensured. The first reflectance R1 may be 0.4, 0.5, 0.6, 0.7, 0.8, 0.9, greater than 0.9, or the like. Although the first reflectance R1 is greater than 0.5, i.e., the allowable angular range W1 is smaller than the Darwin width Wd in the example illustrated in Fig. 6, the first reflectance R1 may be less than or equal to 0.5. It is preferred that the ratio of the second reflectance R2 to the first reflectance R1 indicated in Fig. 9 is minimized. The ratio of the second reflectance R2 to the first reflectance R1 may be less than or equal to 1/2, 1/3, 1/4, 1/5, 1/6, 1/7, 1/8, 1/9, 1/10, or the like.

Specific Examples of Refraction Angle $\theta$, Allowable Angular Range W1, etc.

Numerical values are given below for the case in which the X-rays have an energy of 10 keV (merely referred to as "for 10 keV", hereinafter) and the case in which the X-rays have an energy of 60 keV (merely referred to as "for 60 keV", hereinafter). Each of the numeral values given below is merely an example and a rough number. Assume that the material of the sample 10 in Fig. 3 is iron. The refractive index n of the sample 10 can be expressed as n = 1 - $\delta$. For 10 keV, $\delta$ is equal to 20 x $10^{-6}$. For 60 keV, $\delta$ is equal to 0.75 x $10^{-6}$. The maximum value (2$\delta$) of the refraction angle $\theta$ is 40 $\mu$rad for 10 keV, and is 1.5 $\mu$rad for 60 keV. The diameter D of the sample 10 is 5.5 mm, and the predetermined depth $\Delta$y in the target region 13 is 1 mm. In this case, as illustrated in Fig. 5, the angular range W2 of the refraction angle $\theta$ is from 20 to 40 $\mu$rad for 10 keV, and is from 1 to 1.5 $\mu$rad for 60 keV. Thus, the size of the angular range W2 of the refraction angle $\theta$ (the angular width $\Delta\theta$) is 20 $\mu$rad (40 - 20 ($\mu$rad)) for 10 keV, and is 0.5 $\mu$rad (1.5 - 1 ($\mu$rad)) for 60 keV. The focal length F in Fig. 3 can be expressed as F = (D/2)/{2(1 - n)} = (D/2)/2$\delta$.

Specific Examples of Allowable Angular Range W1, etc.

Numerical values are given below for the case in which the crystal constituting the crystal plate 70 is a single crystal of Si and the surface of the crystal plate 70 is represented by (111). As illustrated in Figs. 6 and 7, the Darwin width Wd is about 30 $\mu$rad for 10 keV, and is about 5 $\mu$rad for 60 keV. As illustrated in Fig. 9, for 10 keV, the size of the allowable angular range W1 is about 25 $\mu$rad provided that the first reflectance R1 is 0.7. The size of the allowable angular range W1 is greater than the angular width $\Delta\theta$ (20 $\mu$rad). As illustrated in Fig. 8, for 60 keV, the size of the allowable angular range W1 is about 3 $\mu$rad provided that the first reflectance R1 is 0.9. The size of the allowable angular range W1 is greater than the angular width $\Delta\theta$ (0.5 $\mu$rad). An adjustment may be made to the orientation of the crystal plate 70, such that the angle of incidence of the X-rays on the crystal plate 70 with the angular range W2 falls within the allowable angular range W1 (Condition a is satisfied).

Specific Examples of Angle Which Surface of Crystal Plate 70 Forms with Incident X-rays X1

In a case where the target of the X-ray source 40 (see Fig. 2) is formed from tungsten and the X-rays emitted by the X-ray source 40 are tungsten K$\alpha$ characteristic X-rays, X-rays have an energy E of 58.9 keV. The wavelength $\lambda$ (Å) of the X-rays is given by the expression $\lambda$ = 12.4/E, and is calculated as $\lambda \approx$ 0.21 (Å). Assume that the crystal plate 70 is a single crystal of Si and the surface of the crystal plate 70 is represented by (111). In this case, the interplanar spacing d (Å) is given by the following expressions:

$$d = a_0/\{\sqrt{(h^2 + k^2 + l^2)}\};$$

and

$$d = a_0/(\sqrt{3}) \approx 3.135 \ (\text{Å}),$$

where ao (Å) represents a lattice constant of Si, and (h, k, 1) specifies the plane orientation of Si.

The angle of incidence $\theta_B$ (rad) that satisfies the Bragg's reflection/diffraction condition is given by the expression $\theta_B = \sin^{-1} (\lambda/2/d)$, and is calculated as $\theta_B \approx 0.034$ (rad).

This can be converted to $\theta_B \approx 0.034/\pi$ x 180 = 1.95 (deg).

This gives $\theta_B \approx 2°$. The same relation holds for the case in which the X-rays have an energy of 10 keV, i.e., $\lambda$ = 1.24 (Å), $\theta_B \approx 0.21$ (rad), and $\theta_B \approx 12°$.

$\theta_B$ is substantially (three or more orders of magnitude) greater than the refraction angle $\theta$ with the angular range W2 indicated in Fig. 5. This means that the orientation and/or size of the crystal plate 70 can be adjusted to square with reality. It is necessary that the refractive X-rays X5 are incident on the crystal plate 70 without fail even when the sample 10 is shifted upward or downward. However, for $\theta_B$ which is as small as the refraction angle $\theta$ with the angular range W2, the crystal plate 70 needs to be elongated to an unrealistic extent.

Detection of X-rays by Detector 80

The density of the inclusion 11 illustrated in Fig. 2 is generally lower than the density of the base material of the sample 10. In general, the X-ray absorption rate of the inclusion 11 is smaller than the X-ray absorption rate of the base material of the sample 10. The X-rays having transmitted through the inclusion 11 are less attenuated than the X-rays having transmitted through only the base material are. The X-rays having transmitted through the inclusion 11 over a longer distance are attenuated to a lesser extent. This leads to an increase in the intensity (brightening) of the X-rays detected by the detector 80.

In the case where the detector 80 includes the plurality of pixels 81, the detector 80 can detect the X-ray intensity distribution which corresponds to the depth position y (see Fig. 3) and the size of the inclusion 11 (distribution or contrast which is reflective of the depth position y and the size of the inclusion 11). In this case, the inclusion 11 is visualized as white spots, bright spots, white lines, bright lines, etc., whereby the depth position y and the size of the inclusion 11 may be estimated. The depth position y of the inclusion 11 may be estimated on the basis of the position of the center of the distribution of, for example, bright spots. The size of the inclusion 11 may be estimated on the basis of the width of the distribution of, for example, bright spots. In the case where the pixels 81 are arranged in a plurality of rows, the shape of the inclusion 11 may be determined straightaway on the basis of the X-ray distribution.

Unlike the detectors 80 (imaging detectors exclusive of TDI detectors) each including the pixels 81 arranged in a plurality of rows, the detectors 80 (line-type detectors) including the pixels 81 arranged in only one row offer the following advantages. In general, the number of pixels 81 is smaller in the line-type detector than in the imaging detector. Assuming that the same number of X-ray photons have entered the respective detectors 80, the number of X-ray photons detected by each pixel 81 is greater in the line-type detector than in the imaging detector. Thus, the line-type detector offers an advantage in that statistical errors develop less frequently. In addition, the line-type detector offers an advantage in that the image processing (computation) for determining the position, size and the like of the inclusion 11 is performed in a shorter period of time (the responsivity is increased). As compared to the imaging detector 80, the line-type detector 80 is more suited to the present embodiment employed in the manufacturing line for the sample 10 (e.g., a wire), and facilitates the inspection of the manufactured sample 10 in its entirety.

Unlike the detector including the pixels 81 arranged in only one row and the imaging detector which is not a TDI detector, the TDI detector 80 offers the following advantages. The TDI detector 80 performs a summation of signals in step with the movement (passage) of the sample 10 in the direction of the central axis 10a. More specifically, in the TDI detector 80, the position of the sample 10 moving in the direction of the central axis 10a coincides with the tier of scanning pixels 81 (the scanning position in the direction of the central axis 10a). A given part of the moving sample 10 undergoes the detection which is repeated a given number of times (as many as the number of tiers), and the detector 80 sums up (accumulates) the detection results obtained by the respective tires of pixels. This leads to an increase in the signal strength of the X-rays detected by the detector 80. As compared to the case in which a given part of the sample 10 undergoes detection only once, the TDI detector 80 enables a higher sensitivity (a greater S/N ratio) to be achieved in the detection. In the case where the TDI detector is employed as the detector 80, the detector 80 is capable of readily detecting the inclusion 11 even when the sample 10 moves rapidly.

Condensation of Rays

As illustrated in Fig. 4, X-rays are in some cases condensed due to the inclusion 11. As described above, the refractive index of the inclusion 11 is greater than the refractive index of the base material of the sample 10 (is close to 1). Assume that the inclusion 11 is a void with a refractive index of 1. The inclusion 11 through which the X-rays have transmitted can behave like a concave lens through which the visible rays have transmitted. The distance in Fig. 2 which the X-rays having transmitted through the inclusion 11 travel to enter the detector 80 through the crystal plate 70 is set to a focal length f in Fig. 4 of the X-rays having transmitted through the inclusion 11. In this case, the X-rays having transmitted through the inclusion 11 are condensed at the position of the detector 80 (see Fig. 2) (condensation of rays). Consequently, a significant difference between the strength of the X-rays having transmitted through only the base material of the sample 10 and the strength of the X-rays having transmitted through the inclusion 11 is created (the contrast is increased). In general, the cross section of the inclusion 11 does not have a circular shape (has an odd shape). The condensation of rays may not be sufficient when the inclusion 11 has a particular shape or the like.

The focal length f of the X-rays having transmitted through the inclusion 11 is given below for the case in which the base material of the sample 10 is iron. In the case where the X-rays have an energy of 10 keV, the focal length f is given by the expression $f = (d/2)/(2\delta)$ is calculated as about 1 m, provided that the inclusion 11 has a diameter d of 80 $\mu$m. In this case, $2\delta$ (the maximum value of the refraction angle $\theta$) is 40 $\mu$rad (see Fig. 5). In the case where the X-rays have an energy of 60 keV, the focal length f given by the above expression is calculated as about 1 m, provided that the inclusion 11 has a diameter d of about 3 $\mu$m. In this case, $2\delta$ is 1.5 $\mu$rad (see Fig. 5).

Conditions Regarding Angular Range W2

As described above, it is required that the angle of incidence of the X-rays on the crystal plate 70 with the angular range W2 in Fig. 9 falls within the allowable angular range W1. It is thus required that the size of the angular range W2 (the angular width $\Delta\theta$) is smaller than the allowable angular range W1. In addition, it is preferred that the size of the angular range W2 (the angular width $\Delta\theta$) is smaller the Darwin width Wd (see Fig. 3).

Conditions Regarding Emittance W3

Given that the predetermined depth $\Delta y$ indicated in Fig. 9 remains constant, the angular range W2 (the effective angular range W2 with the emittance W3 of the incident X-rays X1 (see Fig. 4) taken into consideration) increases as the emittance W3 increases. Consequently, the angle of incidence of X-rays on the crystal plate 70 with the angular range W2 is likely to fall outside the allowable angular range W1. It is thus required that the emittance W3 indicated in Fig. 4 is smaller than the allowable angular range W1, and is smaller than, for example, Darwin width Wd (see Fig. 6). It is preferred that the emittance W3 is smaller than the angular range W2 (see Fig. 5).

In the case where the luminescent point of the X-ray source 40 illustrated in Fig. 3 has a point-like shape, the emittance W3 (see Fig. 4) is given by the following expression.

$$\text{emittance} \approx (\text{the diameter of the luminescent point of the X-ray source 40}) \div$$
$$(\text{the distance which the X-rays travel from the X-ray source 40 to the sample 10})$$

For example, the diameter of the luminescent point of the X-ray source 40 is assumed to be 4 $\mu$m. The distance between the X-ray source 40 to the sample 10 is assumed to be about 30 cm for 10 keV, and is about 1 m for 60 keV. In this case, the emittance W3 (see Fig. 4) can be smaller than the Darwin width Wd (see Fig. 6), and can be smaller than the angular range W2 (see Fig. 5). The diameter of the luminescent point and the distance given above square with reality.

Conditions Regarding Sharpness W4

It is required that the leading edge (trailing edge) of the rocking curve in Fig. 6 is sharp enough to enable the extraction of the refractive X-rays X5. For example, a sharpness W4, which is the full width at half maximum of the leading edge of the rocking curve, is preferably smaller than the emittance W3 (see Fig. 4), and is preferably smaller than the width of the angular range W2 of the refraction angle $\theta$.

Regarding Inspection System S

As illustrated in Fig. 1, the plurality of inspection apparatuses 20 are stacked along the central axis 10a of the sample 10. The plurality of inspection apparatuses are arranged so as to surround the sample 10. When viewed in the direction of the central axis 10a, the plurality of the inspection apparatuses 20 are disposed radially about the central axis 10a, with a predetermined angle (e.g., an equal angle) formed by the inspection apparatuses adjacent to each other. Each of the inspection apparatuses 20 is for an inspection of corresponding one of different target regions 13 (see Fig. 2) along the circumference of the sample 10. The number of the inspection apparatuses 20 is determined such that the target regions 13 on the entire circumference of the sample 10 can be inspected. In the case where the cross section of the sample 10 is circular, the number of the inspection apparatuses 20 is determined on the basis of the diameter of the sample 10 and the predetermined depth $\Delta y$ (see Fig. 3) in the target regions 13. For example, the number of the inspection apparatuses is 6 to 8. In a case where N represents the number of optical systems (the first optical systems 20A or the second optical systems 20B) illustrated in Fig. 2, each optical system is for an inspection of the target region 13 including the arc length (the surface of the circular cross section of the sample 10) at (360 ÷ N)°. In a case where N represents the number of inspection apparatuses 20 each including two optical systems (the first optical systems 20A and the second optical systems 20B), each inspection apparatus 20 is for an inspection of the target region 13 including the arc length at (180 ÷ N)°. It is preferred that the target regions 13 subjected to inspections performed through the use of the individual inspection apparatuses 20 partially overlap each other, viewed in the direction of the central axis 10a.

The inspection apparatuses 20 or the inspection system S (see Fig. 1) (hereinafter referred to as "inspection apparatuses 20") may be installed in the equipment for manufacturing the sample 10 (a wire), such that an in-line inspection is carried out. The inspection apparatuses 20 are for inspections of the sample 10 (e.g., a wire) fresh off the production line, and for inspections of the sample 10 immediately after the formation of an approximately circular cross section by the material processing. The inspection apparatuses 20 are for inspections of portions of the sample 10 which are unaffected, as much as possible, by the displacement or rotation (e.g., a change in the direction orthogonal to the central axis 10a, rotation about the central axis 10a, etc.) of the sample 10. It is preferred that the surface of the sample 10 subjected to the inspections through the use of the inspection apparatuses 20 is kept free of scales (deposits) and/or scratches. The entire length (entirety) of the manufactured sample 10 is preferably inspected by using the inspection apparatuses 20. Alternatively, a part of the manufactured sample 10 (obtained by sampling) may be subjected to the inspections through the use of the inspection apparatuses 20, and an off-line inspection, as generally referred to, may be carried out. The inspection apparatuses 20 may use an analog signal processing circuit alone to detect the inclusion 11. The inclusion 11 can be detected more rapidly through the analog signal processing than through the digital processing (e.g., image processing). Thus, the inspection apparatuses 20 are more suited to in-line inspections. Alternatively, the inspection apparatuses 20 may detect the inclusion 11 through the digital processing.

Effects of First Mode of Invention

The inspection apparatus 20 illustrated in Fig. 2 produces effects which will be described below.

Feature 1-1: The inspection apparatus 20 is for an inspection of the target region 13 including a part of the subsurface portion 12 of the sample 10 having an approximately circular cross section.

Feature 1-2: The inspection apparatus 20 includes the X-ray source 40 that emits X-rays, the crystal plate 70 being a single crystal, and the detector 80.

Feature 1-3: The crystal plate 70 is disposed to reflect and diffract X-rays having been emitted by the X-ray source 40 and refracted in the target region 13 (the refractive X-rays X5). The crystal plate 70 is disposed to allow X-rays having been emitted by the X-ray source 40 and entering the crystal plate 70 without having been incident on the sample 10 (the rectilinear X-rays X3) to transmit through the crystal plate 70.

Feature 1-4: The detector 80 detects the intensity of the X-rays (the reflected and diffracted X-rays X7) reflected and diffracted by the crystal plate 70.

According to the feature 1-1, the sample 10 illustrated in Fig. 3 has an approximately circular cross section. Thus, the X-rays entering the target region 13 are refracted in the direction Y (the refractive X-rays X5). On the other hand, the X-rays that are not incident on the sample 10 (the rectilinear X-rays X3) are not refracted in the sample 10. Consequently, a difference may be created between the angle of incidence of the rectilinear X-rays X3 on the crystal plate 70 and the angle of incidence of the refractive X-rays X5 on the crystal plate 70. This angular difference enables the feature 1-3 to be achieved. By virtue of the features 1-3 and 1-4, the refractive X-rays X5 enter the detector 80 and the rectilinear X-rays X3 transmit through the crystal plate 70. The detector 80 is thus capable of detecting the intensity of the refractive X-rays X5 while eliminating or reducing the rectilinear X-rays X3 which may be detected as noises. The accurate detection of the inclusion 11 in the subsurface portion 12 (the target region 13) of the sample 10 illustrated in Fig. 2 is enabled accordingly.

As a result, the following effects may be attained. By virtue of the features 1-3 and 1-4, the refractive X-rays X5 enter the detector 80 and the rectilinear X-rays X3 transmit through the crystal plate 70 even when the sample 10 is shifted in the direction orthogonal to the central axis 10a. Thus, the inspection apparatus 20 may be used in a situation where the sample 10 is likely to be shifted in the direction orthogonal to the central axis 10a.

Effects of Second Mode of Invention

Feature 2: The inspection apparatus 20 includes the shield 90. The shield 90 is interposed between the sample 10 and the detector 80. The shield 90 blocks X-rays having transmitted through the sample 10 and traveling toward the detector 80 without entering the crystal plate 70.

By virtue of the feature 2, the shield 90 illustrated in Fig. 2 blocks X-rays that may be detected by the detector 80 as noises. Thus, an improvement of the signal-to-noise (S/N) ratio of the refractive X-rays X5 detected by the detector 80 is enabled. The more accurate detection of the inclusion 11 in the target region 13 of the sample 10 is enabled accordingly.

Effects of Third Mode of Invention

Feature 3: The inspection apparatus 20 includes the collimating element 50. The collimating element 50 is disposed between the X-ray source 40 and the sample 10. The collimating element 50 collimates and condenses X-rays such that the X-rays travel from the collimating element 50 toward the crystal plate 70 and that the X-rays pass through the outer vicinity of the surface of the sample 10 and through the target region 13.

According to the feature 3, the X-rays are collimated and condensed. Therefore, an increase in the intensity of the X-rays incident on the sample 10 is enabled in the case of being collimated and condensed than in the case of being diffused.

This effect will be described below in detail. There is a tendency to consider that the inspection of the region at the depth position y (see Fig. 3) deeper in the sample 10 is enabled by increasing the energy of the X-rays and in turn promoting the transmission of the X-rays through the sample 10. In reality, the allowable angular range W1 indicated in Fig. 9 decreases with increasing energy of the x-rays. It is required that the size of the angular range W2 is smaller than the size of the allowable angular range W1. When the allowable angular range W1 is reduced, the angular range W2 needs to be reduced accordingly. This means that the predetermined depth $\Delta y$ in the target region 13 needs to be reduced. Thus, it may be impossible to inspect the region at the depth position y (see Fig. 3) deeper in the sample 10 even when the energy of the X-rays is increased. As an alternative to this, the X-rays may be condensed so as to increase the amount of X-rays incident on the target region 13 as illustrated in Fig. 2, whereby the detection of the inclusion 11 may be facilitated.

Effects of Fourth Mode of Invention

Feature 4: The collimating element 50 is disposed in such a manner that the angle of incidence of X-rays having been emitted by the X-ray source 40 onto the collimating element 50 is smaller than the critical angle, and the collimating element 50 is a mirror having a paraboloid, with the focal point at the position of the luminescent point of the X-ray source 40.

By virtue of the feature 4, the X-rays are collimated and condensed reliably.

Effects of Sixth Mode of Invention

The pair of collimating elements 50 are arranged in mirror symmetry with respect to the plane P, and the pair of crystal plates 70 are arranged in mirror symmetry with respect to the plane P. The plane P is parallel to the central axis 10a of the approximately circular cross section (the sample 10) and lies across the X-ray source 40, the sample 10 and the detector 80. The detector 80 includes the first optical unit 80A and the second optical unit 80B. The first detection unit 80A detects X-rays refracted in the first target region 13A that is one part of the target region 13 on one side with respect to the plane P (the plane of symmetry). The second detection unit 80B detects X-rays refracted in the second target region 13B that is the other part of the target region 13 on the side opposite to the first target region 13A with respect to the plane P.

Feature 6: The first detection unit 80A and the second detection unit 80B constitute different portions of the detector 80.

The inspection apparatus 20 involves, in particular, the feature 6. When being inspected by using different detectors 80, the target region 13A and the target region 13B are susceptible to the difference in characteristic and sensitivity between the detectors 80. The feature 6 can eliminate such a difference in characteristic and/or sensitivity. As a result, the following effects may be attained. For example, in the calculation of the difference signal from signals detected by the first detection unit 80A and the second detection unit 80B, a greater difference (contrast) between the strength of the X-rays having transmitted through only the base material of the sample 10 and the strength of the X-rays having transmitted through the inclusion 11 may be created. Thus, the inclusion 11 can be detected with higher sensitivity.

Effects of Seventh Mode of Invention

Feature 7: The detector 80 includes the plurality of pixels 81 arranged in one row or a plurality of rows. Each of the plurality of pixels 81 detects the intensity of X-rays.

As compared to the case in which only one pixel 81 is provided, i.e., the plurality of pixels 81 are not arranged in one row or a plurality of rows, the feature 7 facilitates the detection of the X-ray intensity distribution. Thus, the position, size and/or shape of the inclusion 11 may be determined when an appropriate number of pixels 81 are arranged in an appropriate direction.

Effects of Eighth Mode of Invention

Feature 8: The approximately circular cross section (the shape of the cross section of the sample 10) is an approximately perfect circle.

By virtue of the feature 8, the X-rays (the refractive X-rays X5) having transmitted through the sample 10 at the depth position y being a position at a lesser depth have a greater refraction angle θ. Furthermore, the angle of incidence of the refractive X-rays X5 n the crystal plate 70 hardly changes even when the sample 10 rotates around the central axis 10a. Consequently, a difference is more likely to be created between the angle of incidence of the rectilinear X-rays X3 on the crystal plate 70 and the angle of incidence of the refractive X-rays X5 on the crystal plate 70. Accordingly, the feature 1-3 is achieved more reliably. Thus, the inclusion 11 can be detected with higher sensitivity.

Effects of Ninth Mode of Invention

Feature 9: The system S illustrated in Fig. 1 includes the plurality of inspection apparatuses 20. Each of the inspection apparatuses 20 is for an inspection of corresponding one of different target regions 13 (see Fig. 2) along the circumference of the sample 10.

As compared to the case in which only one inspection apparatus 20 is provided, the feature 9 enables an inspection of a wider area of the sample 10 for the inclusion 11.

Effects of Tenth Mode of Invention

The inspection method according to the present embodiment produces effects which will be described below.

Feature 10: The inspection method is for an inspection of the target region 13 including a part of the subsurface portion 12 of the sample 10 having an approximately circular cross section as illustrated in Fig. 2. The inspection method includes: allowing X-rays (the refractive X-rays X5) having been emitted by the X-ray source 40 and refracted in the target region 13 to be reflected and diffracted at the crystal plate 70; allowing X-rays (the rectilinear X-rays X3) having been emitted by the X-ray source 40 and entering the crystal plate 70 without having been incident on the sample 10 to transmit through the crystal plate 70; and detecting with the detector 80 the intensity of the X-rays reflected and diffracted by the crystal plate 70.

The feature 10 produces effects similar to those described in "Effects of First Mode of Invention".

Second Embodiment

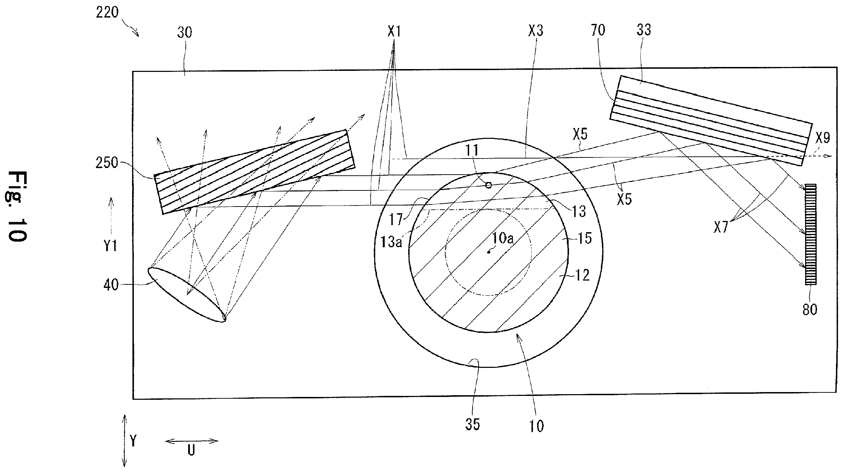

With reference to Fig. 10, the following will describe the distinction between the inspection apparatus 20 of the first embodiment and an inspection apparatus 220 of the second embodiment. Constituent members of the inspection apparatuses 220 of the second embodiment which are equivalent to those of the first embodiment are denoted by the same reference signs, and will not be further elaborated here. The principle distinction resides in a collimating element 250.

As illustrated in Fig. 2, the collimating element 50 of the first embodiment is a mirror having a paraboloid. Meanwhile, as illustrated in Fig. 10, the collimating element 250 of the second embodiment is a single crystal having a flat plate-like shape. The collimating element 250 is obtained by asymmetrically cutting a single crystal. The surface of the collimating element 250 is non-parallel to (inclined with respect to) the lattice plane of the crystal constituting the collimating element 250. The collimating element 250 condenses and collimates X-rays by taking advantage of the asymmetrical Bragg's reflection and diffraction. More specifically, as to a symmetrically cut single crystal (e.g., the crystal plate 70), the angle of incidence is equal to the angle of reflection, and the angular width of incident X-rays is equal to the angular width of the reflected and diffracted X-rays (symmetrical reflection). On the other hand, as to an asymmetrically cut single crystal (the collimating element 250), the angle of incidence is not equal to the angle of reflection, and the angular width of incident X-rays is not equal to the angular width of the reflected and diffracted X-rays (asymmetrical reflection). The collimating element 250 condenses and collimates X-rays with a greater angular width into X-rays with a smaller angular width in a specific direction. The front face of the collimating element 250 is flat and smooth enough for the asymmetrical Bragg's reflection and diffraction to occur. The collimating element 250 is formed from, for example, a single crystal of Si.

As illustrated in Fig. 2, the luminescent point of the X-ray source 40 of the first embodiment has a point-like shape, such that the collimating element 50 can produce enhanced effects of collimation and condensation. On the other hand, as illustrated in Fig. 10, the X-ray emitting portion of the X-ray source 40 of the second embodiment may be planar (a surface emitting body), not a point-like shape. Thus, an increase in the intensity of the X-rays emitted by the X-rays 40 is enabled. It is preferred that the collimating element 250 is disposed as close as possible to the X-ray source 40, thereby allowing the X-rays emitted by the X-ray source 40 to be incident on the collimating element 250 as much as possible. For example, the distance between the X-ray source 40 and the collimating element 250 is substantially shorter than the distance between the collimating element 250 and the sample 10. The inspection apparatus 220 may include two optical systems (the first optical system 20A and the second optical system 20B) as illustrated in Fig. 2, or may include only one optical system as illustrated in Fig. 10. It is not required that the inspection apparatus 220 includes the collimator 60 (and the shield 90) illustrated in Fig. 2.

Effects of Fifth Mode of Invention

The inspection apparatus 220 illustrated in Fig. 10 produces effects which will be described below.

Feature 5: The collimating element 250 is a single crystal. The collimating element 250 has a flat and smooth front face that is non-parallel to a crystal plane of the collimating element 250.

By virtue of the feature 5, the X-rays are collimated and condensed reliably.

By virtue of the feature 5, the following effects may be attained. As described above, when the energy of the X-rays is increased, the allowable angular range W1 indicated in Fig. 9 is reduced, and the predetermined depth $\Delta y$ in the target region 13 needs to be reduced accordingly in some cases. In the second embodiment, meanwhile, the angular width of the X-rays having been reflected and diffracted by the collimating element 250 illustrated in Fig. 10 is reduced as the energy of the X-rays is increased. As a result, the degree of parallelism of the incident X-rays X1 can be increased, and in turn, the emittance W3 indicated in Fig. 4 can be reduced. Given that the predetermined depth $\Delta y$ in the target region 13 remains constant, the angular range W2 indicated in Fig 9 (the effective angular range W2 with the emittance W3 taken into consideration) decreases as the emittance W3 decreases. Consequently, the angle of incidence of X-rays on the crystal plate 70 with the angular range W2 is likely to fall within the allowable angular range W1. Thus, when the energy of the X-rays is increased, the need to reduce the predetermined width $\Delta y$ in the target region 13 is eliminated or minimized. Furthermore, an increase in the energy of the X-rays leads to an increase in the signal strength of the X-rays detected by the detector 80 illustrated in Fig. 10, whereby the detection of the inclusion 11 is facilitated.

Modifications

Various modifications may be made to the configuration in each embodiment. Varying combinations of the constituent components of different embodiments may be included. The layout and/or number of the constituent components may be changed in each embodiment, and some of the constituent components may be omitted. For example, it is not required that the number of the inspection apparatuses 20 illustrated in Fig. 2 is more than one. The inspection apparatus 20 may include the first optical system 20A, and may omit the second optical system 20B. The inspection apparatus 20 may inspect the target region 13 of the sample 10 for a flaw (void). The collimating element 50 may be omitted, and the X-ray source 40 may emit parallel incident X-rays X1 instead.

An inspection apparatus 20 is for an inspection of a target region 13 including a part of a subsurface portion 12 of a sample 10 having an approximately circular cross section. The inspection apparatus 20 includes an X-ray source 40 that emits X-rays, a crystal plate 70 being a single crystal, and a detector 80. The crystal plate 70 is disposed to reflect and diffract X-rays (refractive X-rays X5) having been emitted by the X-ray source 40 and refracted in the target region 13. The crystal plate 70 is disposed to allow X-rays (rectilinear X-rays X3) having been emitted by the X-ray source 40 and entering the crystal plate 70 without having been incident on the sample 10 to transmit through the crystal plate 70. The detector 80 detects an intensity of the X-rays (reflected and diffracted X-rays X7) reflected and diffracted by the crystal plate 70.

Explanation of the Reference Symbols

| | |
|---|---|
| 10 | sample |
| 10a | central axis |
| 12 | subsurface portion |
| 13 | target region |
| 13A | first target region |
| 13B | second target region |
| 20, 220 | inspection apparatus |
| 40 | X-ray source |

| 50 | collimating element (mirror) |
| 70 | crystal plate |
| 80 | detector |
| 80A | first detection unit |
| 80B | second detection unit |
| 81 | pixel |
| 90 | shield |
| 250 | collimating element |
| P | plane (plane of symmetry) |
| S | inspection system |

**Claims**

1. An apparatus for an inspection of a target region comprising a part of a subsurface portion of a sample having an approximately circular cross section, the apparatus comprising:

   an X-ray source that emits X-rays;
   at least one crystal plate that is a single crystal and is disposed to reflect and diffract X-rays having been emitted by the X-ray source and refracted in the target region, and to allow X-rays having been emitted by the X-ray source and entering the at least one crystal plate without having been incident on the sample to transmit through the at least one crystal plate; and
   a detector that detects an intensity of the X-rays reflected and diffracted by the at least one crystal plate.

2. The apparatus according to claim 1, further comprising a shield that is interposed between the sample and the detector to block X-rays having transmitted through the sample and traveling toward the detector without entering the at least one crystal plate.

3. The apparatus according to claim 1, further comprising at least one collimating element disposed between the X-ray source and the sample,
   wherein the at least one collimating element collimates and condenses X-rays such that the X-rays travel from the at least one collimating element toward the at least one crystal plate and that the X-rays pass through an outer vicinity of a surface of the sample and through the target region.

4. The apparatus according to claim 3, wherein the at least one collimating element is a mirror disposed in such a manner that an angle of incidence of X-rays having been emitted by the X-ray source is smaller than a critical angle, the mirror having a paraboloid, with a focal point at a position of a luminescent point of the X-ray source.

5. The apparatus according to claim 3, wherein the at least one collimating element is a single crystal and has a flat and smooth front face that is non-parallel to a crystal plane of the at least one collimating element.

6. The apparatus according to claim 3, wherein
   the at least one collimating element comprises a pair of collimating elements arranged in mirror symmetry and the at least one crystal plate comprises a pair of crystal plates arranged in mirror symmetry, each with respect to a plane being parallel to a central axis of the approximately circular cross section and lying across the X-ray source, the sample and the detector, and
   the detector comprises:

   a first detection unit that detects X-rays refracted in a first target region that is one part of the target region on one side with respect to the plane; and
   a second detection unit that detects X-rays refracted in a second target region that is the other part of the target region on a side opposite to the first target region with respect to the plane, the first detection unit and the second detection unit constituting different portions of the detector.

7. The apparatus according to claim 1, wherein the detector comprises a plurality of pixels arranged in one row or a plurality of rows, and
   each of the plurality of pixels detects an intensity of X-rays.

**8.** The apparatus according to claim 1, wherein the approximately circular cross section is an approximately perfect circle.

**9.** An inspection system comprising a plurality of the apparatuses according to claim 1,
wherein each of the plurality of apparatuses is for an inspection of corresponding one of different target regions along a circumference of the sample.

**10.** A method for inspecting a target region comprising a part of a subsurface portion of a sample having an approximately circular cross section, the method comprising:

allowing X-rays having been emitted by an X-ray source and refracted in the target region to be reflected and diffracted at a crystal plate, and allowing X-rays having been emitted by the X-ray source and entering the crystal plate without having been incident on the sample to transmit through the crystal plate; and
detecting with a detector an intensity of the X-rays reflected and diffracted by the crystal plate.

Fig. 1

Fig. 2

Fig. 3

Fig. 4

Fig. 5

Fig. 6

Fig. 7

Fig. 8

Fig. 9

Fig. 10

Europäisches
Patentamt

European
Patent Office

Office européen
des brevets

**EUROPEAN SEARCH REPORT**

Application Number

EP 18 15 4343

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WERNICK M N ET AL: "MULTIPLE-IMAGE RADIOGRAPHY", PHYSICS IN MEDICINE AND BIOLOGY, INSTITUTE OF PHYSICS PUBLISHING, BRISTOL GB, vol. 48, no. 23, 7 December 2003 (2003-12-07), pages 3875-3895, XP001193875, ISSN: 0031-9155, DOI: 10.1088/0031-9155/48/23/006 | 1-5,7-10 | INV. G01N23/20008 |
| A | * the whole document * | 6 | |
| X | US 2015/226685 A1 (CONNOR DEAN M [US]) 13 August 2015 (2015-08-13) | 1-5,7-10 | |
| A | * abstract; figures 1,9 * | 6 | |
| X | US 2004/258202 A1 (WERNICK MILES N [US] ET AL) 23 December 2004 (2004-12-23) | 1-5,7-10 | |
| A | * abstract; figures 1-3 * | 6 | |
| X | WO 2011/052419 A1 (HITACHI LTD [JP]; YONEYAMA AKIO [JP]; UEDA KAZUHIRO [JP]) 5 May 2011 (2011-05-05) | 1-5,7-10 | TECHNICAL FIELDS SEARCHED (IPC) |
| A | * abstract; figure 2 * | 6 | G01N G21K A61B |

The present search report has been drawn up for all claims

| Place of search | Date of completion of the search | Examiner |
|---|---|---|
| The Hague | 3 July 2018 | Gilow, Christoph |

## ANNEX TO THE EUROPEAN SEARCH REPORT
## ON EUROPEAN PATENT APPLICATION NO.

EP 18 15 4343

This annex lists the patent family members relating to the patent documents cited in the above-mentioned European search report.
The members are as contained in the European Patent Office EDP file on
The European Patent Office is in no way liable for these particulars which are merely given for the purpose of information.

03-07-2018

| Patent document cited in search report | Publication date | Patent family member(s) | Publication date |
|---|---|---|---|
| US 2015226685 A1 | 13-08-2015 | NONE | |
| US 2004258202 A1 | 23-12-2004 | NONE | |
| WO 2011052419 A1 | 05-05-2011 | JP 5256352 B2 <br> JP WO2011052419 A1 <br> WO 2011052419 A1 | 07-08-2013 <br> 21-03-2013 <br> 05-05-2011 |

EPO FORM P0459

For more details about this annex : see Official Journal of the European Patent Office, No. 12/82

**REFERENCES CITED IN THE DESCRIPTION**

**Patent documents cited in the description**

- JP 2010038627 A

- JP 2006026425 A